# EUROPEAN PATENT APPLICATION

(11) **EP 1 530 022 A1**
(43) Date of publication of application: **11.05.2005**
(21) Application number: 03025821.4
(22) Date of filing: 10.11.2003
(51) Int. Cl.: G01B 11/00

(54) **Thickness measurement method of a resin joint boot**

(71) Applicant: TOYO TIRE & RUBBER CO., LTD ., Nishi-ku, Osaka-shi, Osaka-fu (JP)
(72) Inventor: Ohshita, Takenori, Nishiku Osaka (JP); Imazu, Eiichi, Nishiku Osaka (JP); Ueda, Takeshi, Nishiku Osaka (JP); Saito, Katsushi, Nishiku Osaka (JP)
(74) Representative: Leson, Thomas Johannes Alois, Dipl.-Ing.

(57) **Abstract**

In order to measure the thickness of a resin joint boot having a complicated configuration in a short time and highly accurately, a thickness measurement method is provided, according to which a measuring sample (10) is prepared by cutting a section from a peripheral part of the boot (1); a first distance meter (34) irradiating a laser beam on the external surface of the sample is used to measure a distance from its reflected light and a second distance meter (36) irradiating a laser beam on the internal surface of the sample is used to measure a distance from its reflected light are disposed in an opposing manner in respect to the sample; while moving the first and second distance meters in the axial direction of the sample, respective distances between both meters and the sample are detected at predetermined intervals measuring the thickness of the sample.

## Description

### Technical Field

This invention relates to a thickness measurement method of a joint boot made of resin in a bellows form used for a constant velocity joint, etc. of automobiles and to a quality control method of the resin joint boot using the measurement method.

### Background Art

For joints of drive shafts for automotive vehicles or industrial machinery, joints boots are installed in order to retain the grease sealed therein and to prevent dust or the like from entering. In general, a joint boot is constructed of a large-diameter cylindrical portion to be fitted on a housing member of a joint, a small-diameter cylindrical portion coaxially disposed with the large-diameter cylindrical portion in a spaced relationship and to be fitted on a shaft, and a bellows portion integrally interconnecting both.

Hitherto the joint boots of this kind have been fabricated by injection molding of a rubber material such as chloroprene rubber. Due to recent requirement to a high durability, however, ones made of a resin such as thermoplastic polyester elastomer resin come into use (e.g., JP Patent Application Publication 2002-228016 A).

Such a joint boot made of resin is formed generally by a so-called injection blow molding, wherein the small-diameter cylindrical portion is injection molded and the bellows portion inclusive of the large-diameter cylindrical portion is blow molded. When the large-diameter cylindrical portion is thus subjected to blow molding, although its outer peripheral surface side can be configured exactly by the instrumentality of a mold for blow molding in a manner conforming to the contour of the mold surface, it is difficult to configure its inner peripheral surface side exactly because of the absence of any mold surface defining the contour. As a consequence, upon manufacturing it is likely to cause a dispersion in thickness of the large-diameter cylindrical portion depending upon the manufacture conditions, etc. Because the large-diameter cylindrical portion fitted on the housing member serves to exhibit a sealing property as stated above, it is of prime importance, in controlling the quality of a joint boot made of resin, to control particularly the thickness of the large-diameter cylindrical portion.

For thickness measurement of a resin joint boot, for example, a method of using a measuring projector has been adopted so far, wherein the large-diameter cylindrical portion is optically enlarged and projected with the measuring projector in a predetermined magnification (e.g. 10-fold), the projected image is traced by hand on a tracing paper or the like, and its thickness is measured with a ruler. However, this conventional method has problems in that not only does it takes a great deal of time to measure, but also a large measurement error is resulted.

Generally in order to measure the thickness of a measuring object such as a belt or plate, a measurement technology using laser beam is known. For example, JP Patent Application Publication 2002-168608 A discloses a belt thickness measurement device, wherein a belt under running is supported at its reverse face by a measuring position support face and a non-contact measuring element is installed at the front face side of the belt, from which element a laser beam is emitted to receive the reflected light, whereby it is possible to determine the belt thickness.

Further JP Patent Application Publication 2001-147116 A discloses a plate thickness measurement device equipped with a laser type thickness meter, which comprises two distance meters each for measuring a distance from a reflected light obtained by the irradiation of a laser beam onto the surface of an object being measured, the two distance meters being disposed in an opposed manner through the intermediary of the plate-shaped object, wherein respective distances between the distance meters and the object are detected thereby determining the thickness of the object.

However, these state-of-the-art measurement methods using a laser beam are designed for measuring a relatively simple shaped object such as a belt or plate, and any application example to a resin joint boot which has a complicated configuration is never known.

### Disclosure of the Invention

In view of the circumstances described above, this invention has been accomplished, and it is an object of the invention to provide a measurement method capable of measuring the thickness of a joint boot made of resin having an intricate configuration for a short period of time and with high accuracy. Further object is to provide a simplified and accurate quality control method of a resin joint boot using this measurement method.

This invention is directed to a thickness measurement method of a joint boot made of resin composed of a large-diameter cylindrical portion at axially one end side, a small-diameter cylindrical portion at the axially other end side, and a bellows portion interconnecting integrally both, which method comprises preparing a sample for thickness measurement by cutting a section out of a peripheral part of the joint boot; disposing a first distance meter for irradiating a laser beam on an external surface of the sample and determining a distance from its reflected light and a second distance meter for irradiating a laser beam on an internal surface of the sample and determining a distance from its reflected light in an opposed manner through the intermediary of the sample; while moving the first and second distance meters in the axial direction of the sample, detecting respective distances between each of the distance meters and the sample at predetermined intervals, thereby measuring the thickness of the sample at the predetermined intervals.

According to this invention, the sample for thickness measurement cut out from the peripheral part is used, and the thickness measurement is made at the predetermined intervals, while moving the two distance meters irradiating a laser beam respectively on the external and internal surfaces of the sample in the axial direction of the sample. Because of this, it is possible to conduct the thickness measurement on a resin joint boot having a complicated configuration for a short period of time and with high accuracy

In the foregoing thickness measurement method, the measurement may be made with only axially one part of the sample. Otherwise it is also possible to conduct the thickness measurement with an axially overall part of the resin joint boot by moving the first and second distance meters in the axial direction of the sample from either one of the large-diameter and small-diameter cylindrical portions toward the other.

In the thickness measurement method of this invention, when moving the first and second distance meters in the axial direction of the sample, the sample may be moved in an axially square direction while interlocking with the movement of both distance meters until it is shifted to a nearly intermediate position between both distance meters. Thereby it is possible to minimize the measurement error.

A quality control method of a joint boot made of resin pertaining to this invention comprises measuring the thickness of the sample according to the above-described thickness measurement method and comparing the measurement result(s) so obtained with a preliminarily determined product specification, thus conducting the judgement of acceptance or rejection.

According to such quality control method of this invention as described, the thickness of the resin joint boot can be measured for a short time and with high accuracy by virtue of the above-described thickness measurement method, so that it is possible to conduct simply and accurately the pass-fail (acceptability) judgement in light of the product specification.

In this invention, the aforementioned joint boot can be such that the joint boot is to be secured at its large-diameter cylindrical portion to an outer periphery of a housing member of a joint, the housing member having a groove on its outer periphery; and further that the large-diameter cylindrical portion is provided, on its external peripheral face, with a fixing recess on which to fit and fix a fastening band and ,at an internal peripheral face side of the boot located at the fixing recess, with a sealing projection, with the fixing recess being further formed on its external peripheral face with a channel or channels. In that case, according to the quality control method of this invention, when measuring the thickness of the sample, it is possible to conduct the thickness measurement at least at locations of the sealing projection of the large-diameter cylindrical portion, which locations correspond to opening edges at the groove of the housing member - with which the sealing projection is engaged - and to compare the measured thickness results at the aforesaid locations with the preliminarily determined product specification, thus conducting the judgement of acceptance or rejection. Otherwise from the thickness measurement results of the sample, it is possible to calculate a distance in the axial direction of the boot between two points lower than the apex point of the sealing projection by a predetermined height and to compare the calculated distance with the preliminarily determined product specification, thereby discriminating between acceptance and rejection. The measurement and the pass-fail judgement thus taking note of the large-diameter cylindrical portion enables a simplified and accurate quality checking of the sealing property.

### Brief Description of the Drawings

Fig. 1 is a front elevational view of a thickness measurement device for a joint boot made of resin relating to one embodiment of this invention;
Fig. 2 is a conceptual view representing the thickness measuring operation;
Fig. 3 is a half sectional, half side elevational view of the resin joint boot;
Fig. 4 is a sectional view of a large-diameter cylindrical portion of the joint boot;
Fig. 5 is a view representing thickness measurement results of the large-diameter cylindrical portion shown in Fig. 4; and
Fig. 6 is a sectional view showing a modification example of a large-diameter cylindrical portion.

### Best Mode for Carrying Out the Invention

The embodiments of this invention will be hereinafter described with reference to the accompanying drawings.

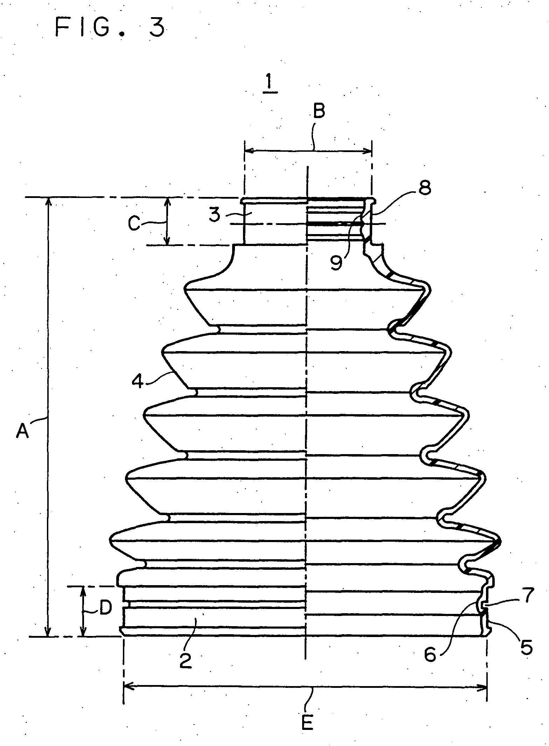

In the embodiment, the thickness measurement method will be described, exemplifying a joint boot 1 made of thermoplastic elastomer resin to be mounted on a constant velocity joint for automobiles as shown in Fig. 3.

The joint boot 1 is composed of a large-diameter cylindrical portion 2, a small-diameter cylindrical portion 3 disposed concentrically with the large-diameter cylindrical portion 2 in a spaced relationship, and a bellows portion interconnecting integrally the large-diameter cylindrical portion 2 and the small-diameter cylindrical portion 3, and fabricated by injection blow molding, wherein the small-diameter cylindrical portion 3 constitutes an injection molded part whereas the large-diameter cylindrical portion 2 and the bellows portion 4 constitute a blow molded part.

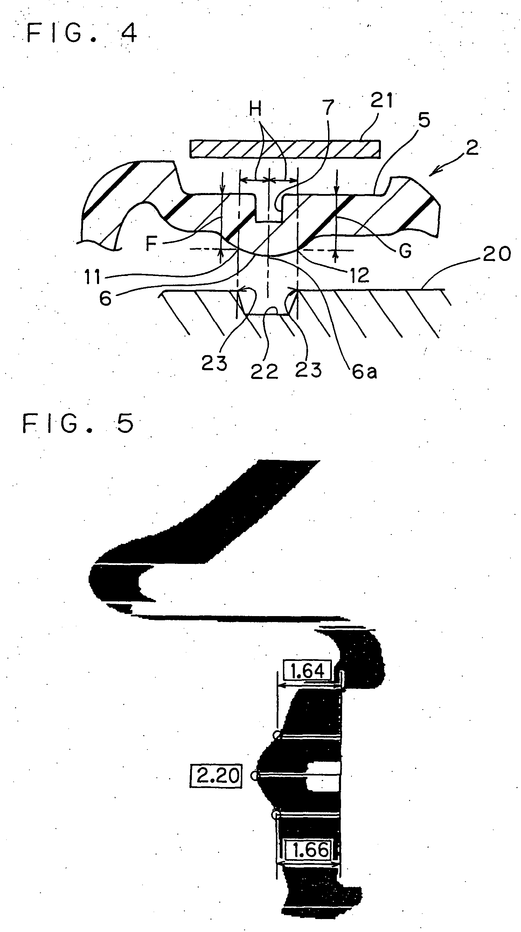

The large-diameter cylindrical portion 2 assumes a short cylinder body to be externally fitted and fixed by a fastening band 21 on the outer peripheral surface of an extremity of a cylindrical housing member 20 of a constant velocity joint, and is provided on its external peripheral surface with a fixing recess 5 for receiving therein the ring-like band 21, the recess extending in the circumferential direction (cf. Fig. 4). At an internal peripheral surface side of the fixing recess 5, a sealing projection 6 of a convex form in section extending in the circumferential direction is formed, and at the external peripheral surface side of the boot situated in an axially widthwise central area of the sealing projection 6, there is further provided a channel 7 extending in the circumferential direction. And the sealing projection 6 is adapted to be fitted into a groove 22 provided on the outer periphery of the housing member 20, by covering the large-diameter cylindrical portion 2 with the housing member 20 and fastening it with the band 21, whereby a sealing ability is exhibited.

The small-diameter cylindrical portion 3 assumes a short cylinder body to be externally fitted and fixed on the outer peripheral surface of a shaft not shown, which protrudes from the housing member 20, with a similar fastening band to that of the large-diameter cylindrical portion 2. On the external peripheral surface of it, there is provided a fixing recess 8 extending in the circumferential direction for receiving the fastening band therein, whereas on the internal peripheral surface thereof, a sealing projection 9 extending in the circumferential direction is provided.

The bellows portion 4 is of a bellows body of a circular form in section tapering in diameter down from the large-diameter cylindrical portion 2 to the small-diameter cylindrical portion 3 and constitutes internally a grease sealing space.

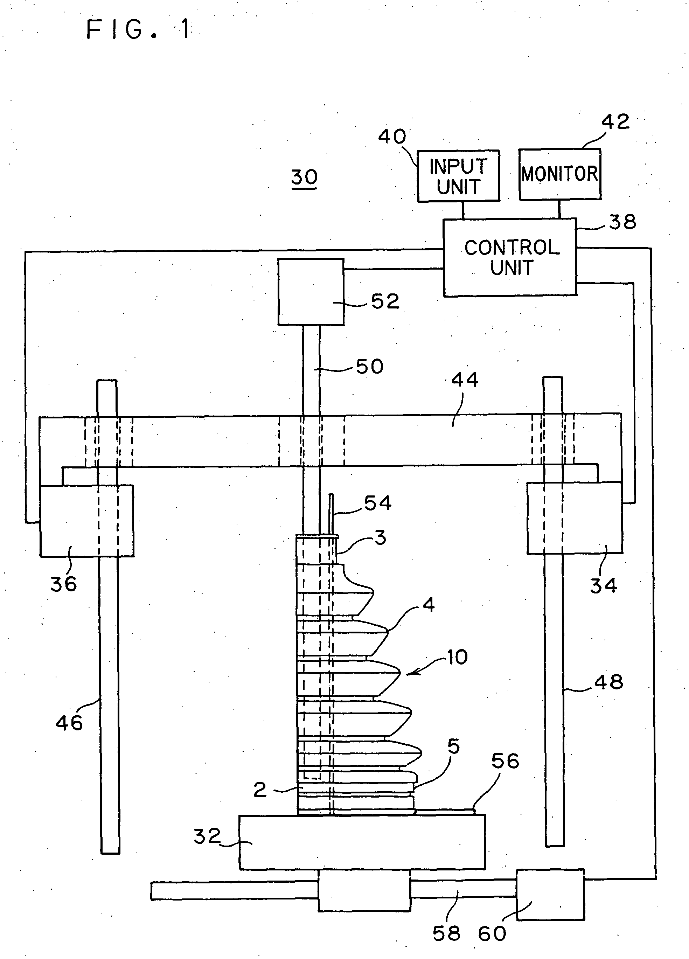

A thickness measuring device 30 for this joint boot 1 comprises, as shown in Fig. 1, a support stand 32 for supporting a measuring sample 10, a first distance meter 34 for irradiating laser beam on the outer surface of the sample 10 to measure a distance from its reflected light, a second distance meter 36 for irradiating laser beam on an inner surface of the sample 10 to measure a distance from its reflected light, a control unit 38 controlling these distance meters, an input unit 40 inputting the information such as measuring conditions and a monitor 42 outputting information.

The first and second distance meters 34, 36 are attached and secured to both lateral ends of a horizontally extending frame 44 so as to oppose laterally to each other through the intermediary of the sample 10 supported on the support stand 32. And these meters are constructed so that both the distance between the first distance meter 34 and the outer surface of the sample 10 irradiated with the laser beam and the distance between the second distance meter 36 and the inner surface of the sample 10 irradiated with the laser beam are detected, and the detected information is transmitted to the control unit 38.

The frame 44 is constructed of three vertical rails including a pair of laterally disposed guide rails 46, 48 and a central drive rail 50, and a motor 52 connected to the drive rail 50 so as to be vertically slidably movable. Thereby the first and the second distance meters 34, 36 are movable together in the vertical direction, namely in the axial direction of the sample 10.

The support stand 32 serves to support the measuring sample 10, with its axial direction oriented vertically so that the large-diameter cylindrical portion 2 is directed downwardly and the small-diameter cylindrical portion 3 upwardly Since the sample 10 cut out from a peripheral part of the boot as shown in Fig. 1 is employed with a view to supporting the joint boot thus cut out stably in a standing state in a definite position on the support stand 32, a support bar 54 positioning the internal peripheral surface of the small-diameter cylindrical portion 3 and extending vertically upwardly is disposed vertically and further, a support plate 56 for positioning the external peripheral surface of the large-diameter cylindrical portion 2 is disposed.

The support stand 32 is constructed so as to be laterally movable by means of a horizontal rail 58 laterally extending and a motor 60 connected thereto between the first and second distance meters 34, 36 opposing to each other. Thereby the distances between both distance meters 34, 36 and the sample 10 can be changed.

Now the thickness measurement method and quality control method of a resin joint boot 10 using the measuring device 30 will be described.

First prior to the thickness measurement, a boot for measuring the thickness is selected at random from joint boots 10 as manufactured, and a sample 10 is prepared by cutting out from a peripheral part of this selected boot. In cutting, if only a distance can be measured by irradiating a laser beam on the internal surface of the boot by means of the second distance meter 36, it is possible to cut out in an optional peripheral area of the boot. In the illustrated example in Fig. 1 the boot is cut nearly in a half.

Then the sample 10 is fixed on the support stand 32 as shown in Fig. 1 and undergoes the thickness measurement by use of the first and second distance meters 34, 36.

In measuring, first, measuring conditions of the device side are input from the input unit 40. The measuring conditions include a travelling speed of the first and second distance meters 34, 36 moving downwardly, a measuring pitch by means of both distance meters 34, 36, etc. The travelling speed is preferred to be 50 to 200 mm/min. If it is slower than that range, it will take a long time to measure whereas if faster, then the measurement error is likely to be greater, for instance, for the reason why there may be resulted unmeasured locations in the axial direction of the boot, although this depends on the measuring pitch. The measuring pitch is preferred to be 20 to 200 micrometers.

The measuring conditions to be input as the boot side information includes an axial height A of the boot for defining the measurement starting position, a diameter B of the small-diameter cylindrical portion 3, an axial dimension C of the small-diameter cylindrical portion 3, an axial dimension D of the large-diameter cylindrical portion 2, and a diameter E of the large-diameter cylindrical portion 2 (cf. Fig. 3). By inputting the information of these parameters, it is possible to evaluate an optimal moving speed of the support stand 32 when moved while interlocking with the movement of the first and second distance meters 34, 36.

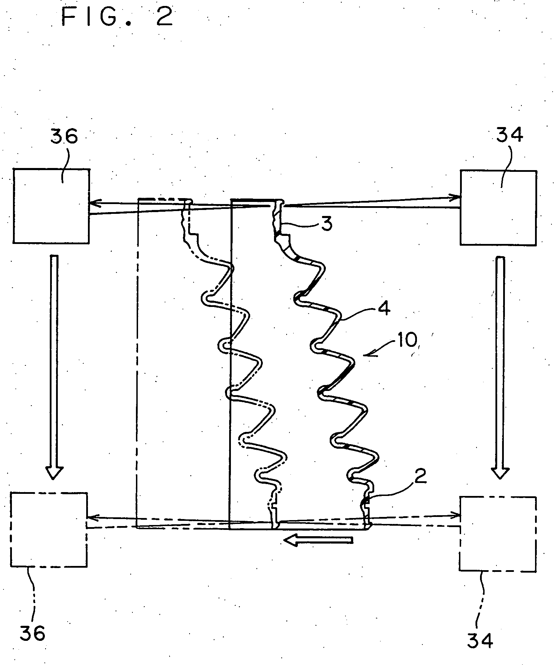

As shown in Fig. 2, the measurement is made while moving the first and second distance meters 34, 36 along the axial direction of the sample 10 from the small-diameter cylindrical portion 3 at the upper end to the large-diameter cylindrical portion 2 at the lower end, by detecting respective distances between each of the distance meters 34, 36 and the sample surface at intervals of the aforementioned measuring pitch. At that time, in this embodiment, as both distance meters 34, 36 are moved downwardly, the support stand 32 bearing the sample 10 is shifted in the axially rectangular direction (vertical direction to the axial direction of the boot) at a definite speed so that the sample is always situated in an approximately intermediate position between both the distance meters 34, 36. Stated another way, the setting for measurement is made so that when measuring the thickness of the small-diameter cylindrical portion 3 at the upper end, measuring locations of the small-diameter cylindrical portion 3 may be situated in the approximately intermediate position between both distance meters 34, 36; as the distance meters 34, 36 are moved downwardly, the support stand 32 is moved toward the second distance meter 36, and when measuring the thickness of the large-diameter cylindrical portion 2 at the lower end of the sample 10, measuring locations of it may be situated in the approximately intermediate position between both distance meters 34, 36.

Respective distances between each of the distance meters 34, 36 and the surface of the sample are thus detected at intervals of the aforesaid measuring pitch. Then evaluating the difference between both distances enables it to determine the thickness at each of the measuring locations, because the distance between both distance meters 34, 36 is a definite value.

After measuring the thickness of the sample 10 in this manner, the measurement values are compared to values of a preliminarily determined product specification thereby conducting a judgement of acceptance or rejection. If the measurements fall within the product specification values, the overall manufacture lot from which the sample is extracted is judged as acceptance, while the measurements fall outside the product specification values, the overall manufacture lot from which the sample is extracted is judged as rejection. Concurrently with such pass-fail judgement as described, it is possible to conduct the quality control of sealing property, particularly by taking note of the large-diameter cylindrical portion 2.

Specifically stated, as illustrated in Fig. 4, the thickness amounts F and G are measured at two axial locations 11, 12 of the large-diameter cylindrical portion 2, which correspond to both opening edges 23, 23 of the groove 22 of the housing member 20, and compared to the preliminarily determined product specification values, as a result of which the pass-fail judgement is performed by evaluating as acceptance in the case of the on-specification value and as rejection in the case of the off-specification value. More specifically, for instance where the opening width of the groove 22 is 4 mm, it will suffice to measure the thickness amounts F, G at the locations 11, 12 which are axially spaced apart at a distance of 2 mm (H) respectively from the apex point 6a of the sealing projection 6 of the large-diameter cylindrical portion 2.

Fig. 5 shows the image processing representation of the thickness measurement results of the large-diameter cylindrical portion 2 shown in Fig 4, wherein thickness amounts are indicated at the apex point 6a of the sealing projection 6 and at the two locations 11, 12 situated axially at both sides thereof.

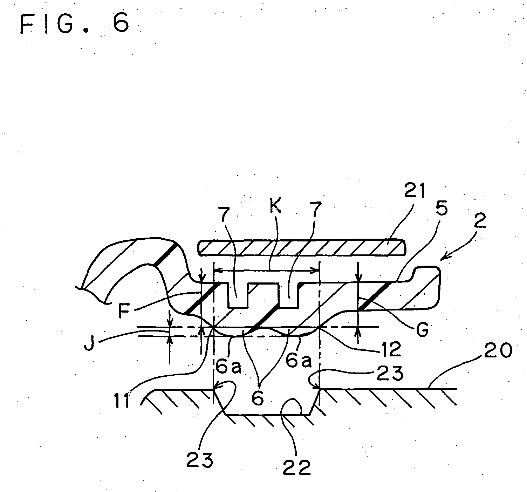

Fig. 6 illustrates a variant example of the large-diameter cylindrical portion 2. Although the example of Fig. 4 shows one-crest type of the sealing projection 6, this example illustrates two-crest type of two sealing projections 6 provided axially, wherein two channels 7 are also axially provided at their external peripheral surface sides. Also in this case, the thickness F and the thickness G at the two axial locations 11, 12 of the large-diameter cylindrical portion 2 corresponding to both opening edges 23, 23 are likewise measured, as is the case with the one-crest type of projection, whereby the judgement of acceptance or rejection can be made.

Instead of the above, it is alternatively possible to conduct the pass-fail judgement in a manner such that from the thickness measurement results of the sample 10 above, a distance K between the two axial locations 11, 12 lower by a predetermined height J (e.g., 0.2 mm) than the apex points 6a, 6a of the sealing projections 6, 6 is calculated and compared to the preliminarily determined production specification value, as a result of which a case of the on-specification value is judged as acceptance and a case of the off-specification value as rejection.

According to the embodiments of this invention thus far described, it is possible to measure the thickness of a resin joint boot having a complicated configuration by use of a laser beam for a short period of time and with high accuracy.

Particularly due to the fact that the present embodiments are effected so that the support stand 32 is moved interlocking with the movement of the first and second distance meters 34, 36 so that the sample 10 may be always situated nearly in the intermediate position of both distance meters, the distance of from the distance meters 34, 36 to the sample 10 is roughly the same value over the whole axial direction of the boot. Hence the error of thickness measurements at the large-diameter cylindrical portion 2 can be minimized, which is of critical importance for the evaluation of the sealing property.

Moreover by conducting the thickness measurement and the judgement of acceptability taking note of the large-diameter cylindrical portion 2 as described above, the quality checking of sealing property can be done simply and accurately.

As an aside, although the foregoing embodiments are concerned with the thickness measurement made to the axial entirety of the sample 10, the thickness measurement may also be made at only axially one part of the sample 10 such as the large-diameter cylindrical portion 2 only.

## Claims

1. A thickness measurement method of a joint boot (1) made of resin including a large-diameter cylindrical portion (2) and a small-diameter cylindrical portion axially at the one end side and the other end side thereof respectively and a bellows portion integrally interconnecting both,
which method comprises preparing a sample (10) for thickness measurement by cutting one section out of a peripheral part of the joint boot;
disposing a first distance meter (34) for irradiating laser beam on an external surface of the sample to measure a distance from its reflected light and a second distance meter (36) for irradiating laser beam on an internal surface of the sample to measure a distance from its reflected light in an opposed manner through the intermediary of the sample;
and detecting respective distances between each of the distance meters and the sample at predetermined intervals, while moving the first distance meter and the second distance meter in the axial direction of the sample, thereby to determine respective thickness amounts of the sample at the predetermined intervals.

2. The thickness measurement method of a joint boot made of resin as claimed in claim 1, which is **characterized in that** the first and the second distance meters are moved in the axial direction of the sample from either one of the large-diameter and the small-diameter cylindrical portions toward the other.

3. The thickness measurement method of a joint boot made of resin as claimed in claim 1 or 2, which is **characterized in that** the first and the second distance meters are moved in the axial direction of the sample at a speed of 50 to 200 mm/min.

4. The thickness measurement method of a joint boot made of resin as claimed in any one of claims 1 to 3, **characterized in that** when the first and the second distance meters are moved in the axial direction of the sample, the sample is moved in an axially rectangular direction, while interlocking with the movement of both distance meters, until it is shifted to an approximately intermediate position between both distance meters.

5. A quality control method of a joint boot made of resin **characterized in that** according to the thickness measurement method of a joint boot made of resin as claimed in any one of claims 1 to 4, the thickness of the sample is measured and the resulting measurements are compared to a preliminarily determined product specification, thereby conducting the judgement of acceptance or rejection.

6. The quality control method of a joint boot made of resin as claimed in claim 5, wherein the joint boot is to be secured, at the large-diameter cylindrical portion thereof, outboard to a housing member (20) of a joint, the housing member having a groove (22) outboard,
**characterized in that** the joint boot is provided on an external peripheral surface of the large-diameter cylindrical portion with a fixing recess (5), on which to fit and fix a fastening band, and is formed, at an internal peripheral surface side of the boot situated at the fixing recess, with a sealing projection (6), the fixing recess being provided at an external peripheral surface side situated at the sealing projection further with a channel (7);
that when measuring the thickness of the sample, at least locations (11, 12) of the sealing projection (6) of the large-diameter cylindrical portion that are situated corresponding to opening edges (23) of the groove (22) of the housing member (20) engaged with the sealing projection are measured, and the thickness amounts at said locations are compared with a preliminarily determined product specification, thus conducting the judgment of acceptance or rejection.

7. The quality control method of a joint boot made of resin as claimed in claim 5, **characterized in that** the joint boot is defined on an external peripheral surface of the large-diameter cylindrical portion with a fixing recess (5) on which to mount and fix a fastening band, the fixing recess being formed at an internal peripheral surface side of the boot with a sealing projection (6), the sealing projection being provided at its external peripheral surface side with a channel (7);
from the thickness measurement results of the sample, a distance (K) in the axial direction of the boot between two points lower than an apex point (6a) of the sealing projection by a predetermined height is calculated, and the calculated distance is compared with a preliminarily determined product specification thereby conducting the judgement of acceptance or rejection.
